(19) **Europäisches Patentamt**
**European Patent Office**
**Office européen des brevets**

(11) **EP 2 429 099 A2**

(12) **EUROPEAN PATENT APPLICATION**

(43) Date of publication:
**14.03.2012 Bulletin 2012/11**

(51) Int Cl.:
***H04B 7/26*** (2006.01)

(21) Application number: **11185102.8**

(22) Date of filing: **28.05.2004**

(84) Designated Contracting States:
**AT BE BG CH CY CZ DE DK EE ES FI FR GB GR HU IE IT LI LU MC NL PL PT RO SE SI SK TR**

(30) Priority: **28.05.2003 GB 0312186**

(62) Document number(s) of the earlier application(s) in accordance with Art. 76 EPC:
**04735272.9 / 1 642 404**

(71) Applicant: **Wireless Technology Solutions LLC New York, NY 10022 (US)**

(72) Inventor: **Jones, Alan Edward Wiltshire, SN11 9QY (GB)**

(74) Representative: **Scaddan, Gareth Casey et al D Young & Co LLP 120 Holborn London EC1N 2DY (GB)**

Remarks:
•This application was filed on 13-10-2011 as a divisional application to the application mentioned under INID code 62.
•Claims filed after the date of filing of the application (Rule 68(4) EPC).

(54) **Method, base station and mobile station for tdd operation in a communication system**

(57) A generalized duplexing method, base station (122) and mobile station (118) for TDD operation in a communication system (100) having a primary carrier (310; 410) operating in TDD mode; and at least one secondary carrier (320; 420). The method supports half-duplex and full duplex modes of operation. The primary and secondary carrier may operate at different chip rates. This provides the advantages that generalized duplexing operates on more than one RF carrier, and unlike conventional UTRA FDD mode generalized duplexing does not require a fixed frequency duplex spacing between RF carriers.

EP 2 429 099 A2

FIG. 1

## Description

### Field of the Invention

This invention relates to communication systems and particularly Time Division Duplex (TDD) operation in cellular communication systems.

### Background of the Invention

In the field of this invention it is known WCDMA (Wide-band Code Division Multiple Access) there are 2 types of duplexing: Frequency Division Duplexing (FDD) and Time Division Duplexing (TDD). In FDD the separation between the lower frequency resource and the upper frequency resource is typically fixed. All physical resource for the lower band is assigned for uplink traffic and all physical resource for the upper band is assigned for downlink traffic, resulting in a symmetrical split between uplink and downlink.

However, in TDD there is only one band of frequency resource assigned and this can be configured for a mixture of both uplink and downlink physical resource. When multiple frequency channels are available, the conventional approach is to have an independent TDD carrier per frequency channel.

In GB patent application no. 0303079.8 (the content of which is hereby incorporated herein by reference), by the same applicant as the present application, it is proposed that for application of TDD to paired FDD spectrum the FDD lower band be used as a conventional TDD carrier and the FDD upper band be used as a TDD auxiliary downlink channel, thereby increasing the downlink cell throughput.

However, this patent application is restricted to application of TDD to paired FDD spectrum. This invention generalizes and extends the method of the patent application to include multiple frequency channels that are different in both bandwidth and frequency separation.

A need therefore exists for method, base station and mobile station for TDD operation in a communication system wherein the abovementioned disadvantage(s) may be alleviated.

### Statement of Invention

In one implementation, there is provided a method for operation in a communication system as set out in clause 1.

In another implementation there is provided a base station for TDD operation in a communication system as set out in clause 10.

In another implementation there is provided a method, base station and mobile station for TDD operation in a communication system as set out in clause 19.

### Brief Description of the Drawings

One method, base station and mobile station for TDD operation in a communication system incorporating the present invention will now be described, by way of example only, with reference to the accompanying drawing(s), in which:

FIG. 1 shows a block schematic diagram illustrating a 3GPP radio communication system in which the present invention may be used;

FIG. 2 shows a schematic diagram illustrating a frequency domain representation of an example of the method of the present invention in which a primary carrier is supported by four secondary carriers;

FIG. 3 shows a schematic diagram illustrating primary allocation in a first, half-duplex mode of operation; and

FIG. 4 shows a schematic diagram illustrating primary allocation in a second, full-duplex mode of operation.

### Description of Preferred Embodiment (s)

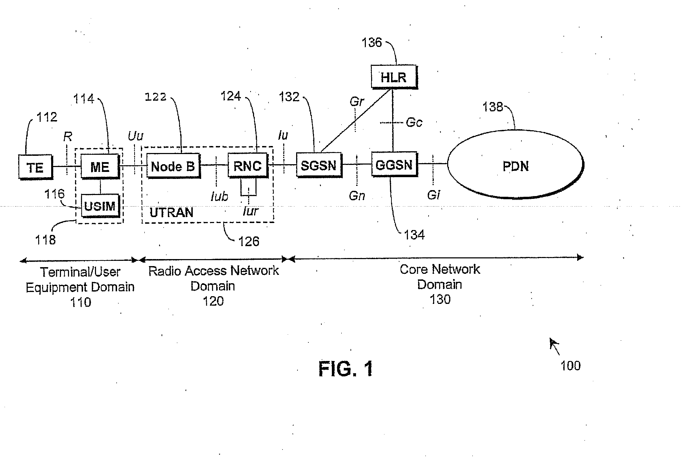

The following preferred embodiment of the present invention will be described in the context of a UMTS Radio Access Network (UTRAN) system operating in TDD mode. Referring firstly to FIG. 1, a typical, standard UMTS Radio Access Network (UTRAN) system 100 is conveniently considered as comprising: a terminal/user equipment domain 110; a UMTS Terrestrial Radio Access Network domain 120; and a Core Network domain 130.

In the terminal/user equipment domain 110, terminal equipment (TE) 112 is connected to mobile equipment (ME) 114 via the wired or wireless R interface. The ME 114 is also connected to a user service identity module (USIM) 116; the ME 114 and the USIM 116 together are considered as a user equipment (UE) 118. The UE 118 communicates data with a Node B (base station) 122 in the radio access network domain 120 via the wireless Uu interface. Within the radio access network domain 120, the Node B 122 communicates with a radio network controller (RNC) 124 via the *Iub* interface. The RNC 124 communicates with other RNC's (not shown) via the *Iur* interface. The Node B 122 and the RNC 124 together form the UTRAN 126. The RNC 124 communicates with a serving GPRS service node (SGSN) 132 in the core network domain 130 via the *Iu* interface. Within the core network domain 130, the SGSN 132 communicates with a gateway GPRS support node (GGSN) 134 via the Gn interface; the SGSN 132 and the GGSN 134 communicate with a home location register (HLR) server 136 via the Gr interface and the Gc interface respectively. The GGSN 134 communicates with public data network 138 via the *Gi* interface.

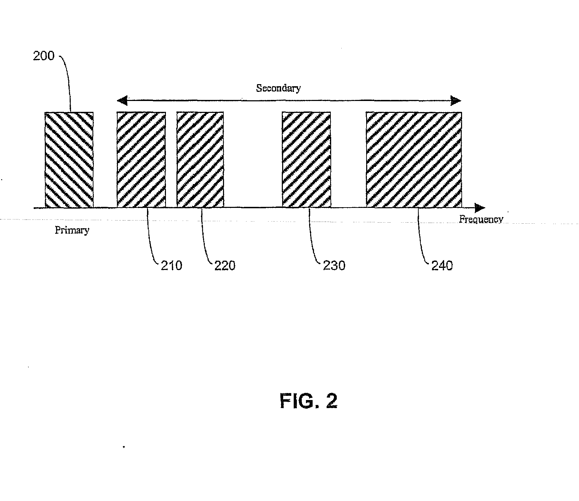

Thus, the elements RNC 124, SGSN 132 and GGSN 134 are conventionally provided as discrete and separate units (on their own respective software/hardware platforms) divided across the radio access network domain 120 and the core network domain 130, as shown the FIG. 2.

The RNC 124 is the UTRAN element responsible for the control and allocation of resources for numerous Node B's 122; typically 50 to 100 Node B's may be controlled by one RNC. The RNC also provides reliable delivery of user traffic over the air interfaces. RNC's communicate with each other (via the *Iur* interface) to support handover and macrodiversity.

The SGSN 132 is the UMTS Core Network element responsible for Session Control and interface to the HLR. The SGSN keeps track of the location of an individual UE and performs security functions and access control. The SGSN is a large centralised controller for many RNCs.

The GGSN 134 is the UMTS Core Network element responsible for concentrating and tunnelling user data within the core packet network to the ultimate destination (e.q., internet service provider - ISP).

Such a UTRAN system and its operation are described more fully in the 3GPP technical specification documents 3GPP TS 25.401, 3GPP TS 23.060, and related documents, available from the 3GPP website at www.3gpp.org, and need not be described in more detail herein.

The present invention may be viewed as a development of the invention described in the afore-mentioned GB patent application no. 0303079.8, in which in application of TDD to paired FDD spectrum the FDD lower band is used as a conventional TDD carrier and the FDD upper band is used as a TDD auxiliary downlink channel, and may be considered as 'Generalized Duplexing' (by which term it will subsequently referred to herein).

The concept of Generalized Duplexing (GD) is derived from the UTRA TDD mode and operates on more than one RF carrier. Unlike conventional UTRA FDD mode GD does not require a fixed frequency duplex spacing between RF carriers. The GD method involves the use of one primary carrier plus one or more secondary carriers. Considered most generally, when the number of secondary carriers is zero GD becomes standard UTRA TDD mode.

When a UE 118 attaches to the UTRAN 126 the UE capability defines whether GD is supported at the UE side or not. If both the UE and UTRAN are capable of GD, then the UTRAN should assign the UE a secondary carrier. The UTRAN should be capable of supporting N secondary carriers; the UE may support only one secondary carrier. The process of allocating the secondary carrier should be controlled by the Radio Resource Manager (RRM - not shown) in the UTRAN network 126. Measurements on secondary carriers should be provided to the network and UEs should be loaded across the carriers accordingly.

FIG. 2 shows an example frequency domain representation of the GD method. In this example, the primary carrier 200 is supported by four secondary carriers 210, 220, 230 and 240. It may be noted that the frequency separation of the secondary carriers 210-240 relative to the primary carrier 200 is arbitrary and does not require a fixed frequency duplex spacing. It will also be appreciated that the chip rates on the primary and secondary carriers can also be different, e.g. the chip rate of the primary carrier 3.84Mcps and the chip rate of the secondary carrier 240 being 7.68Mcps.

*GD Modes of Operation*

GD, considered most generally, supports three modes of operation. In describing these modes, the following notation is presented:

> *Primary Carrier:* The primary carrier shall have all of the attributes associated with 3GPP UMTS TDD Mode. This shall include different chip rates.
> *Secondary* Carrier: The secondary carrier shall have all of the attributes associated with the primary carrier with the following exceptions:

- Support for all downlink time slots is mandatory at both the UE and UTRAN side.

- Uplink (UL) radio bearers including signalling radio bearers are not supported.

Allocation of physical channels on the primary carrier should always take precedence over the secondary carrier. This is particularly applicable when considering those time slots carrying control information.

Time slots associated with beacon, RACH (Random Access Channel) and FACH (Forward Access Channel) are doubled on the primary carrier to allow for flexibility in resource allocation, and maximisation of the secondary carrier throughput.

*Mode 0*

As mentioned above, what may be most generally considered 'mode 0' GD operation corresponds to 3GPP UTRA TDD mode and consists of the following:

- One primary carrier
- No secondary carrier.

*Mode 1*

In 'mode 1' operation GD should have the following:

- One primary and one or more secondary carriers.

- All time slots on the secondary carrier are downlink
- The UE supports half-duplex operation
- Case 2 synchronisation is applied to the primary carrier as defined in the 3GPP technical specification 3GPP TS25.221.
- The network should provide a minimum of 2 PRACH (Physical Random Access CHannel) time slots on the primary carrier.
- The network should provide a minimum of 2 SCCPCH (Secondary Common Control Physical CHannel) time slots on the primary carrier.

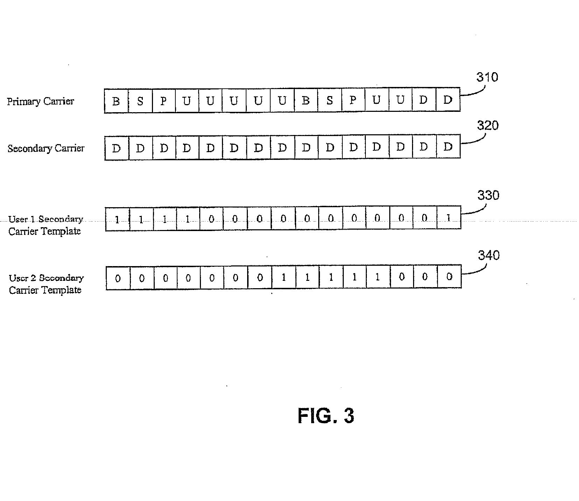

An example of a primary carrier allocation is shown below in FIG. 3 at 310, where B is the Beacon channel, S is the SCCPCH, P is the PRACH, U is uplink DPCH (Dedicated Physical Channel) or PUSCH (Physical Uplink Shared Channel) and D is the downlink DPCH or PDSCH (Physical Downlink Shared Channel).

When a UE attaches to the network it will signal on the uplink whether it is a 'Mode 1 capable' GD UE. If the UE is capable of Mode 1 operation, the serving RNC 124 will create a secondary carrier template for that UE. This template is used by the network to define the available physical resource on the secondary carrier, shown at 320. The template for a first user 'user 1' and a second user 'user 2' are shown in FIG. 3 at 330 and 340 respectively; here we assume that it takes the UE one time slot to retune between the primary and secondary carriers. If no uplink physical resource is assigned, then taking into account the common downlink and uplink signalling on the primary carrier both users have access to 10 downlink time slots on the secondary carrier.

When uplink physical resource is allocated on the primary carrier, the secondary carrier template is updated dynamically by the Radio Resource Manager (RRM - not shown) function at the network side. Let $X_s = (x_{s,0}, x_{s,1}, ..., x_{s,14})$ be the secondary carrier template, where $x_{s,t} = 1$ corresponds to a blocked time slot and $x_{s,t} = 0$ corresponds to an unblocked time slot. For each allocated slot on the primary carrier there are 3 corresponding blocked slots on the secondary carrier, the allocated time slot, and two time slots associated with retuning between the primary and secondary carriers. Let $p$ be the allocated time slot on the primary carrier, then the three blocked time slots on the secondary carrier are given by

$$\left[\operatorname{mod}(p-1,15), p, \operatorname{mod}(p+1,15)\right]$$

If the UE is in mode 1 operation, then all downlink DPCH and PDSCH should be carried on the secondary carrier unless signalled otherwise. Under this condition, the Transmit Power Control (TPC) bits signalled in the uplink should be associated with the secondary carrier. In summary, for mode 1 operation the maximum downlink throughput on the secondary carrier per UE is a function of the uplink allocated resource assigned to that particular UE and the control time slots on the primary carrier.

*Mode 2*

In this mode, the key difference relative to 'mode 1' is that the UE supports full duplex operation. In 'mode 2' operation GD method consists of the following:

- One primary and one or more secondary carriers
- All time slots on the secondary carriers are downlink
- The UE supports full-duplex operation
- The UE has an independent Transmit and a single Receive function.
- Case 2 synchronisation is applied to the primary carrier, as defined in the afore-mentioned 3GPP technical specification 3GPP TS25.221
- The network should provide a minimum of 2 PRACH time slots on the primary carrier
- The network should provide a minimum of 2 SCCPCH time slots on the primary carrier

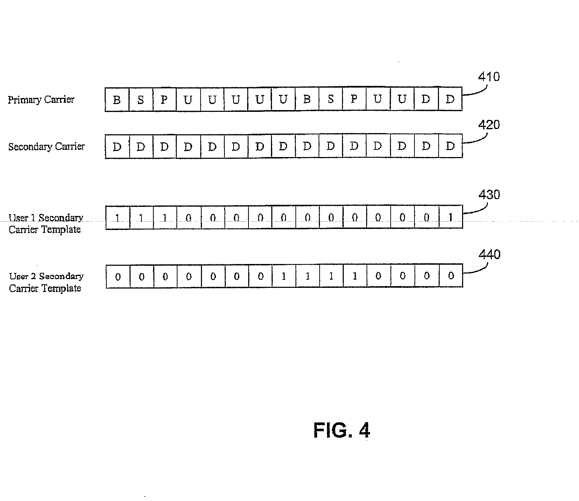

An example of mode 2 operation is shown in FIG. 4, in which primary carrier timeslot allocation is shown at 410, secondary carrier timeslot allocation is shown at 420, and templates for a first user 'user 1' and a second user 'user 2' are shown at 430 and 440 respectively. Since 'mode 2' operates in full duplex it can support both simultaneous transmission and reception. However, since only one Receive function is implemented at the UE side it is still necessary to retune between primary and secondary carriers when associated downlink is available on the primary carrier. This means that time slots on the secondary carrier are blocked due to defined downlink time slots on the primary carrier.

For 'mode 2', the maximum number of blocked time slots on the secondary carrier per UE is determined by the number of PCCPCH (Primary Common Control Channel) and SCCPCH time slots assigned to the UE plus the necessary time slots for retuning between DL transmissions. In the present example this corresponds to 4.

In summary, for 'mode 2' operation the maximum downlink throughput on the secondary carrier per UE is independent of the uplink allocated resource assigned to that particular UE. For sectors that only support 'mode 2' GD, all of the traffic time slots on the primary carrier can be assigned to uplink usage. However, it is likely that the inclusion of downlink traffic slots on the primary carrier will be necessary for backwards compatibility reasons.

In summary, it will be understood that GD described above generalizes the scheme described in GB patent application no. 0303079.8, and provides 3 modes of operation including conventional UTRA TDD mode. Support for multiple RF carriers and multiple chip rates are provided, as are support for half duplex operation and full duplex operation at the UE side. It will be appreciated that the above methods are readily applicable to High Downlink Packet Access (HSPDA).

It will be understood that the method, base station and mobile station for TDD operation in a communication system described above provides the following advantages:

• Generalized Duplexing (GD) operates on more than one RF carrier
• Unlike conventional UTRA FDD mode GD does not require a fixed frequency duplex spacing between RF carriers.

The following numbered clauses provide further example embodiments and aspects of the present invention.

## Clauses

1. A method for TDD operation in a communication system, comprising:

conducting a communication on a primary carrier operating in TDD mode; and
conducting the communication on at least one secondary carrier.

2. The method of clause 1 wherein the communication is operated in half-duplex mode.

3. The method of clause 1 wherein the communication is operated in full-duplex mode.

4. The method of clause 3 wherein the communication is between user equipment having an independent transmit and a single receive function.

5. The method of any one of clauses 1-4 wherein the primary carrier provides at least two physical random access channels.

6. The method of any one of clauses 1-5 wherein the primary carrier provides at least two secondary common control physical channels.

7. The method of any one of clauses 1-6 wherein the at least one secondary carrier supports only downlink communication.

8. The method of any one of clauses 1-7 wherein the primary carrier and the at least one secondary carrier operate at different chip rates.

9. The method of any one of clauses 1-8 wherein the system comprises a 3GPP system.

10. A base station for TDD operation in a communication system, the base station comprising:

means for conducting a communication on a primary carrier operating in TDD mode; and
means for conducting the communication on at least one secondary carrier.

11. The base station of clause 10 wherein the communication is arranged to operate in half-duplex mode.

12. The base station of clause10 wherein the communication is arranged to operate in full-duplex mode.

13. The base station of clause 12 wherein the communication is arranged to operate between user equipment having an independent transmit and a single receive function.

14. The base station of any one of clauses 10-13 wherein the primary carrier is arranged to provide at least two physical random access channels.

15. The base station of any one of clauses 10-14 wherein the primary carrier is arranged to provide at least two secondary common control physical channels.

16. The base station of any one of clauses 10-15 wherein the at least one secondary carrier is arranged to support only downlink communication.

17. The base station of any one of clauses 10-16 wherein the primary carrier and the at least one secondary carrier are arranged to operate at different chip rates.

18. The base station of any one of clauses 10-17 wherein the system comprises a 3GPP system.

19. A mobile station for TDD operation in a communication system, the mobile station comprising:

means for conducting a communication on a primary carrier operating in TDD mode; and
means for conducting the communication on at least one secondary carrier.

20. The mobile station of clause 19 wherein the communication is arranged to operate in half-duplex mode.

21. The mobile station of clause 19 wherein the communication is arranged to operate in full-duplex mode.

22. The base station of clause 21 wherein the mobile station is arranged to have an independent transmit and a single receive function.

23. The mobile station of any one of clauses 19-22 wherein the primary carrier is arranged to provide at least two physical random access channels.

24. The mobile station of any one of clauses 19-23 wherein the primary carrier is arranged to provide at least two secondary common control physical channels.

25. The mobile station of any one of clauses 19-24 wherein the at least one secondary carrier is arranged to support only downlink communication.

26. The mobile station of any one of clauses 19-25 wherein the primary carrier and the at least one secondary carrier are arranged to operate at different chip rates.

27. The mobile station of any one of clauses 19-26 wherein the system comprises a 3GPP system.

**Claims**

1. A method for operation in a communication system supporting communication between at least one user equipment (UE) and a base station on a primary frequency carrier and one or more secondary frequency carriers, comprising:

> conducting a communication on the primary frequency carrier; and
> conducting the communication on at least one secondary frequency carrier of the one or more secondary frequency carriers.

2. The method of claim 1, wherein the communication system supports a plurality of secondary frequency carriers and the communication is conducted on at least two of the plurality of secondary frequency carriers.

3. The method of claim 1 or claim 2, wherein the at least one secondary frequency carrier supports only downlink communication.

4. The method of claim 2, wherein the at least one UE is associated with the at least two secondary frequency carriers; and wherein a frequency separation between the at least two secondary frequency carriers and the primary carrier frequency is arranged to be non fixed frequency duplex spacing.

5. The method of any preceding claim wherein the method further comprises associating a secondary carrier template with the at least one UE for defining available physical resources on the at least one secondary frequency carrier.

6. The method of any preceding claim wherein the frequency separation between the at least one secondary frequency carrier and the primary carrier frequency does not include a fixed duplex separation.

7. The method of any preceding claim wherein the primary carrier provides at least one from a group consisting of: at least two physical random access channels, at least two secondary common control physical channels.

8. The method of any preceding claim further comprising transmitting, by the at least one UE to the base station, a UE capability message that defines whether the at least one UE is capable of communicating on both the primary carrier frequency and the at least one secondary frequency carrier.

9. The method of any preceding claim wherein the primary carrier and the at least one secondary frequency carrier operate at different chip rates.

10. The method of any preceding claim wherein the communication system comprises a 3GPP system.

11. The method of any preceding claim, further comprising determining UE capability upon the UE attaching to the communication system.

12. The method of any preceding claim, wherein the primary frequency carrier and the at least one secondary frequency carrier operate using different bandwidths.

13. The method of any preceding claim, wherein the communication is conducted on the at least one secondary frequency carrier in response to UE capability.

14. A base station for operation in a communication system supporting communication with at least one user equipment (UE) on a primary frequency carrier and one or more secondary frequency carriers, the base station configured to:

> conduct the communication on a primary frequency carrier; and
> conduct the communication on at least one secondary frequency carrier of the one or more secondary frequency carriers.

15. A user equipment (UE) for operation in a communication system supporting communication with a base station on a primary frequency carrier and one or more secondary frequency carriers, the UE being configured to:

conduct the communication on a primary frequency carrier; and

conduct the communication on at least one secondary frequency carrier of the one or more secondary frequency carriers.

**FIG. 1**

100

**FIG. 2**

FIG. 3

Primary Carrier

| B | S | P | U | U | U | U | U | B | S | P | U | U | D | D |
|---|---|---|---|---|---|---|---|---|---|---|---|---|---|---|

410

Secondary Carrier

| D | D | D | D | D | D | D | D | D | D | D | D | D | D | D |
|---|---|---|---|---|---|---|---|---|---|---|---|---|---|---|

420

User 1 Secondary
Carrier Template

| 1 | 1 | 1 | 0 | 0 | 0 | 0 | 0 | 0 | 0 | 0 | 0 | 0 | 0 | 1 |
|---|---|---|---|---|---|---|---|---|---|---|---|---|---|---|

430

User 2 Secondary
Carrier Template

| 0 | 0 | 0 | 0 | 0 | 0 | 0 | 1 | 1 | 1 | 1 | 0 | 0 | 0 | 0 |
|---|---|---|---|---|---|---|---|---|---|---|---|---|---|---|

440

**FIG. 4**

**REFERENCES CITED IN THE DESCRIPTION**

**Patent documents cited in the description**

- GB 0303079 A